# FASCICULE DE BREVET EUROPEEN

(11) **EP 1 019 264 B1**
(45) Date de publication et mention de la délivrance du brevet: **12.05.2004**
(21) Numéro de dépôt: 98946548.9
(22) Date de dépôt: 02.10.1998
(51) Int. Cl.: B60N 2/02, B60R 21/00

(54) **Dispositif de transmission de signaux entre le système de commande d'un véhicule automobile et l'équipement de sécurité d'un siège amovible de celui-ci**
Übertragungsvorrichtung von Signalen zwischen dem Kraftfahrzeug-Steuersystem und der Sicherheitseinrichtung eines herausnehmbaren Sitzes dieses Fahrzeuges
Signal Transmitting Device between the Control System of a Motor Vehicle and the Safety Equipment of a Removable Seat of that Vehicle

(30) Priorité: 02.10.1997 FR 9712275
(43) Date de publication de la demande: 19.07.2000
(73) Titulaire: Renault s.a.s., 92100 Boulogne Billancourt (FR)
(72) Inventeur: FROC, Laurent, F-78170 La Celle Saint Cloud (FR); LAPORTE, Alain, F-78280 Guyancourt (FR); SOUVILLE, Philippe, F-93100 Montreuil (FR)
(86) Numéro de dépôt international: PCT/FR1998/002108
(87) Numéro de publication internationale: WO 1999/017952

(56) Documents cités:
- EP-A- 0 615 879
- EP-A- 0 802 093
- DE-A- 4 008 243
- DE-A- 19 519 130
- DE-C- 19 644 219

## Description

La présente invention est relative à un dispositif de transmission de signaux de commande entre une centrale de commande d'un véhicule automobile et un siège démontable de ce véhicule. Plus particulièrement, l'invention concerne la transmission de signaux de déclenchement des équipements de sécurité d'un siège de véhicule automobile à partir d'une centrale de commande de ce véhicule, dans les conditions de sécurité prescrites et ce alors même que le siège doit être démontable facilement (cf. le préambule de la revendication 1 , qui est généralement connu dans l'art).

On sait que dans les véhicules de type monospace notamment, la modularité de la configuration intérieure à l'habitable est devenue monnaie courante. Pour cela le plancher du véhicule comprend plusieurs rails parallèles permettant de placer les sièges, au choix de l'utilisateur, le long des rails, en général sur plusieurs rangées et ce jusqu'à trois sièges de front. De leur côté, les sièges sont munis d'un système de verrouillage mécanique qui permet de les placer à un endroit quelconque le long de deux rails parallèles, pour autant bien entendu que ces rails coïncident latéralement l'un avec l'autre. On trouvera une description d'un agencement de tels rails pour un véhicule monospace dans le brevet EP 0 615 879 où le système de fixation comporte des "navettes" destinées à recevoir les sièges, ces navettes étant montées coulissantes dans les rails.

On connaît également d'autres systèmes de fixation dits "à pieds amovibles" qui ne comportent aucun élément mobile de verrouillage dans les rails, les organes de verrouillage actifs étant entièrement intégrés dans les pieds du siège, les rails étant formés de simples profilés pourvus de rives d'accrochage. De tels systèmes de fixation sont également connus en soi sous diverses formes. Ils ont l'avantage de rendre le montage et le démontage des sièges extrêmement commodes pour un utilisateur non averti, car les sièges équipés de tels systèmes de fixation peuvent être placés à un endroit quelconque le long des rails, sans que l'utilisateur n'ait à se préoccuper, lorsqu'il met un siège en place, de faire coïncider les pieds avec des navettes correspondantes dans les rails.

Par ailleurs, les équipements de sécurité des véhicules impliquent de plus en plus des agencements de sécurité intégrés dans les sièges comme les prétensionneurs et/ou les coussins gonflables latéraux protégeant le passager occupant le siège contre les impacts latéraux sur le véhicule.

Lorsque les sièges sont montés à demeure sur le plancher avec un réglage limité de la position longitudinale, la communication entre la centrale de commande de déclenchement des équipements de sécurité dans les sièges ne pose pas trop de problèmes dans la mesure où l'interface entre plancher et siège n'a pas à être débranchable ou démontable.

En revanche, lorsque l'un ou l'autre des types de systèmes de fixation décrits ci-dessus est utilisé, la communication entre la centrale de commande du véhicule et le siège doit pouvoir se faire, quelle que soit la position longitudinale choisie pour le siège par l'utilisateur et également quel que soit le nombre de sièges placés les uns derrière les autres sur une même paire de rails. En outre, pour pouvoir garantir la sécurité en toute circonstance, la communication doit pouvoir être réalisée sans l'intervention active de l'utilisateur, à défaut de quoi celui-ci pourrait par mégarde ou à dessein déjouer les dispositifs de sécurité dont le siège est pourvu.

L'invention a pour but de fournir un dispositif assurant la communication entre la centrale de commande du véhicule et le siège satisfaisant les exigences que l'on vient d'évoquer.

L'invention a donc pour objet un dispositif de transmission de signaux de commande entre le système de commande d'un véhicule automobile et un siège démontable de ce véhicule, notamment les signaux de commande destinés à activer l'équipement de sécurité de ce siège, ce siège étant, en configuration d'utilisation, verrouillé dans deux rails parallèles montés dans le plancher du véhicule et conformés de manière à autoriser, au moyen d'un mécanisme de verrouillage, l'installation du siège en une position quelconque souhaitée le long des rails, ledit dispositif comportant des moyens émetteurs de signaux, ces moyens émetteurs étant connectés fonctionnellement audit système de commande du véhicule, caractérisé en ce que lesdits moyens émetteurs sont montés dans au moins l'un des rails et s'étendent sur toute la longueur de celui-ci, en ce que des moyens récepteurs de signaux sont prévus sur le siège et agencés pour, lors du verrouillage du siège sur les rails venir se brancher sur lesdits moyens émetteurs, ces moyens récepteurs étant connectés fonctionnellement audit équipement du siège,
- et en ce que le branchement entre les moyens émetteurs et les moyens récepteurs est assuré automatiquement pendant le verrouillage mécanique du siège sur les rails.

D'autres caractéristiques et avantages de l'invention apparaîtront au cours de la description qui va suivre, donnée uniquement à titre d'exemple et faite en se référant aux dessins annexés sur lesquels:
- la figure 1 est une vue en perspective schématique d'un premier mode de réalisation du dispositif de transmission selon l'invention;
- la figure 2 montre, par une vue de face schématique, les détails des moyens émetteurs et récepteurs de signaux faisant partie du premier mode de réalisation de la figure 1; et
- les figures 3 à 6 montrent quatre variantes du dispositif de transmission selon l'invention, par des vues analogues à celle de la figure 2.

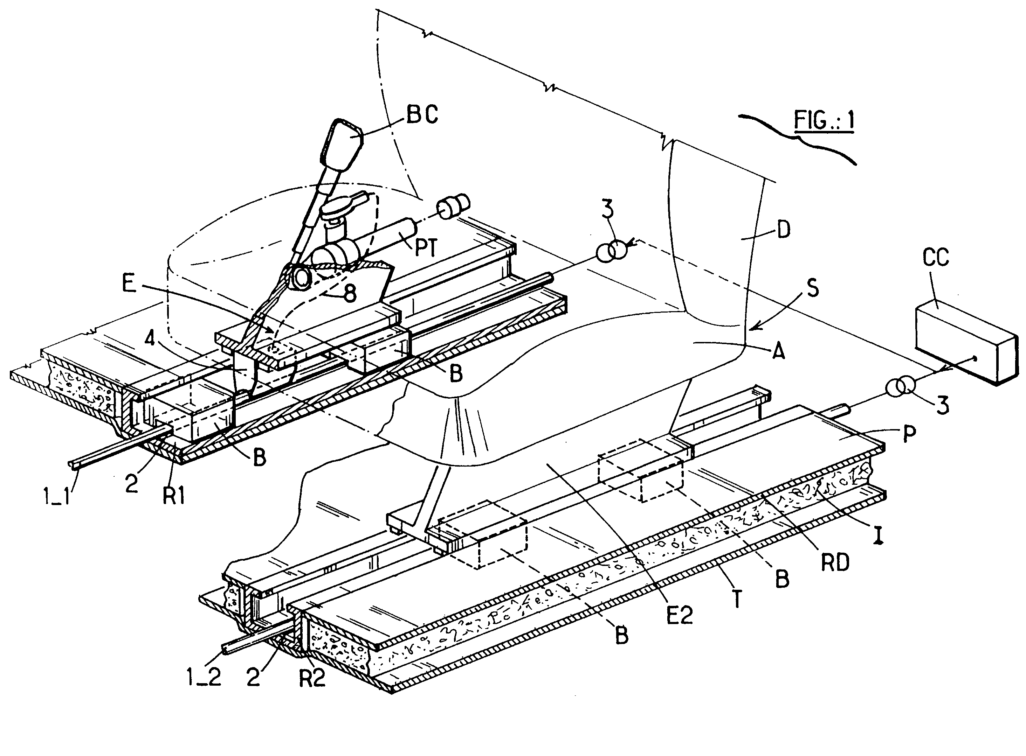

Sur la figure 1, on a représenté un siège de véhicule S ayant une embase en deux parties E1 et E2 sur lesquelles sont montés une assise A et un dossier D, ce dernier pouvant avantageusement être rabattable sur l'assise A afin de pouvoir constituer une tablette, comme cela est bien connu dans les véhicules de type monospace.

Le siège S est placé sur un plancher P du véhicule comportant une tôle de structure T, une isolation I et un revêtement de décoration RD. Des rails R1 et R2 sont disposés dans le plancher P, longitudinalement au véhicule parallèlement l'un à l'autre et avec un écartement qui correspond à l'écartement des parties d'embase E1 et E2 du siège S.

Dans le mode de réalisation représenté, il est supposé que le siège S est muni d'un système de fixation "à pieds amovibles" connu en soi et non détaillé sur la figure 1. Ce système de fixation est symbolisé par des blocs B respectivement avant et arrière intégrés au siège S et capables de se verrouiller sur des rives d'accrochage (non représentées) des rails R1 et R2 à des emplacements longitudinaux quelconques choisis par l'utilisateur. Ce verrouillage pourra se faire par simple enclenchement, lorsque l'utilisateur présente le siège. Bien entendu, le système de fixation du siège peut également être de l'autre type décrit ci-dessus, le siège devant alors être présenté en coïncidence avec des navettes coulissant dans les rails comme cela est décrit dans le brevet EP précité.

Par ailleurs, le siège S est équipé d'un équipement de sécurité supposé être ici un prétensionneur PT de ceinture de sécurité connu en soi et activé dans des circonstances particulières de collision ou de choc violent. Le prétensionneur PT agit sur une boucle de ceinture de sécurité BC. On notera que l'invention peut être appliquée pour tout autre équipement de sécurité intégré au siège tel que par exemple un coussin gonflable protégeant l'occupant du siège S contre les chocs latéraux.

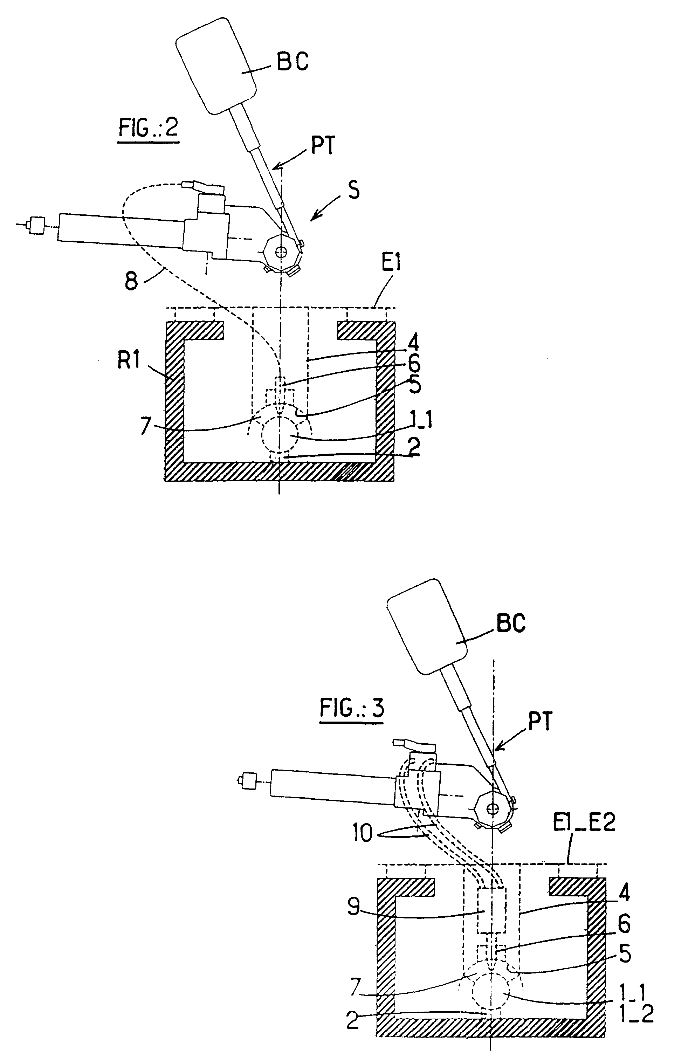

Selon l'invention (qui est définie dans la revendication indépendante), le dispositif de transmission de signaux de commande représenté sur les figures 1 et 2 comprend des moyens émetteurs de signaux se présentant, dans le présent mode de réalisation, sous la forme d'une barre 1-1 et/ou 1-2 montées respectivement dans le fond des rails R1 et/ou R2. Chaque barre est bonne conductrice de l'électricité et court tout le long du rail R1 ou R2 respectif. Elle est montée sur un support isolant 2 fixé sur le fond du rail correspondant (figure 2), soit de distance en distance soit sur toute sa longueur, la barre constituant ainsi un organe formant anode isolé électriquement du châssis du véhicule. Chacune des barres 1-1 ou 1-2 est connectée à un transformateur élévateur de tension 3 disposé dans le plancher P, en bout de chaque rail par exemple. Les transformateurs 3 sont à leur tour reliés à une centrale de commande CC du véhicule. Chaque transformateur élévateur de tension 3 peut être conçu pour porter le signal de sortie de la centrale de commande CC (à 5 volts, par exemple) à une valeur élevée (10 000 Volts, par exemple).

La centrale de commande, connue en soi, est notamment à même d'analyser l'état dynamique du véhicule à chaque instant et le cas échéant, par exemple en cas d'un choc violent, d'engendrer ledit signal de sortie destiné à déclencher des équipements de sécurité du véhicule dont ceux logés dans les sièges, comme le prétensionneur PT et/ou un coussin gonflable latéral.

Le dispositif de transmission de signaux selon l'invention (qui est définie dans la revendication indépendante) comprend également des moyens récepteurs de signaux, montés sous l'une ou les deux parties d'embase E1 et E2 du siège S. Dans le présent mode de réalisation, ces moyens récepteurs comprennent un bloc support 4 fixé sous la partie d'embase E1 et présentant à sa face inférieure une rainure 5 à profil cylindrique concave dans laquelle fait saillie un organe ou électrode 6 formant cathode montée dans le bloc support 4 de manière à être isolée du siège S. Cet organe formant cathode est destiné à coopérer avec la barre d'anode 1-1 ou 1-2 (ici la barre 1-1) du rail R1 ou R2 (ici R1) dans lequel il pénètre, et à agir avec elle comme un éclateur. Une garniture de frottement 7 relativement souple, non conductrice et de forme transversale arquée, maintient un écartement prédéterminé entre la barre d'anode 1-1 et la cathode 6. La cathode 6 est connectée à l'amorce (non représentée) du prétensionneur PT par un conducteur électrique 8.

Lorsque la centrale de commande CC du véhicule fournit un signal de sortie représentant une situation dangereuse nécessitant l'intervention des équipements de sécurité, comme le prétensionneur PT, la barre 1-1 reçoit une tension élevée capable de faire éclater un arc dans l'espace situé entre elle et la cathode 6 du siège S et ce quelle que soit la position longitudinale que ce dernier occupe le long des rails R1 et R2. Une tension de déclenchement peut ainsi être transmise par l'intermédiaire du conducteur 8 aux équipements de sécurité du siège S pour les faire fonctionner dans les conditions de sécurité prescrites.

Le même signal de sortie de la centrale CC peut déclencher les équipements de sécurité de sièges fixés dans les rails R1 et R2, soit qu'ils sont placés sur ces mêmes rails avant ou derrière le siège représenté, soit qu'ils sont fixés sur l'un des rails R1 et R2 et des rails voisins (non représentés) qui peuvent ou non être pourvus de barres conductrices connectées à la centrale CC à travers des transformateurs élévateurs. On voit que la transmission du signal de commande est assurée quelle que soit la position d'un siège sur les rails R1 et R2.

Le mode de réalisation de la figure 3 diffère de celui que l'on vient de décrire en ce que le conducteur 8 de transmission électrique de la tension élevée est ici remplacé par une transmission pyrotechnique comprenant une interface 9 qui est formée d'un allumeur déclenché par la tension élevée de la cathode 6 à laquelle il est connecté. L'allumeur, à son tour est connecté au prétensionneur PT par un ou plusieurs tubes conducteurs pyrotechniques 10 qui sont avantageusement du type désigné par "tube Nonel" par les spécialistes.

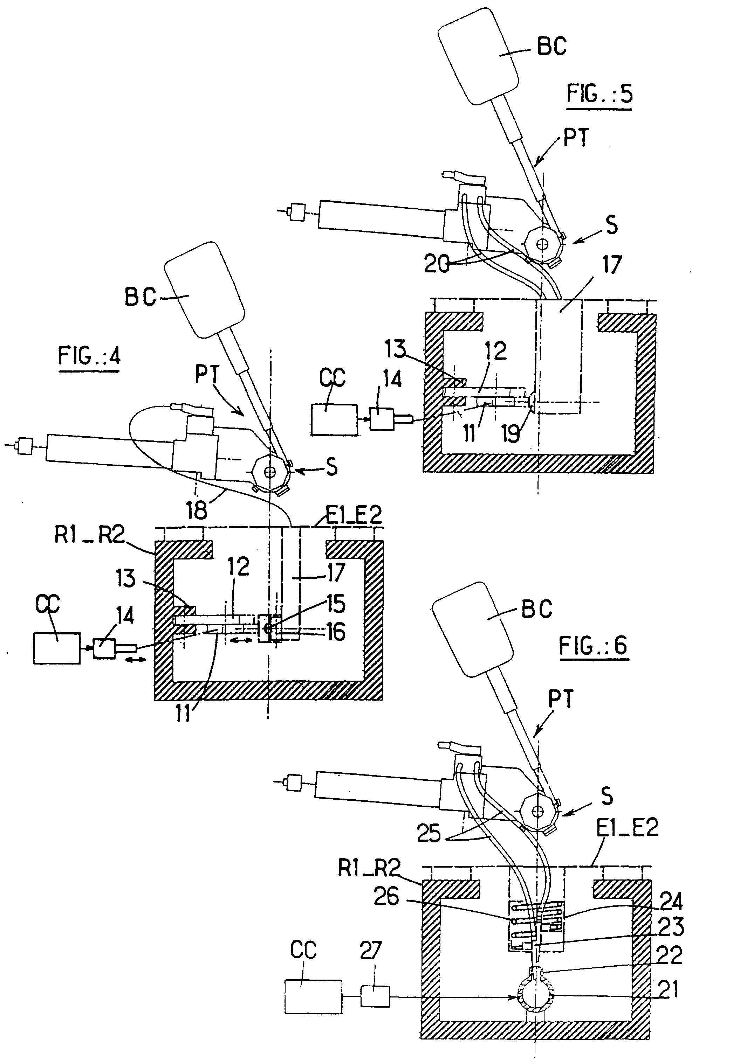

Dans les modes de réalisation des figures 4 et 5, les moyens émetteurs du dispositif de transmission de signal sont formés par un organe mécanique d'actionnement qui dans cet exemple est une réglette 11 courant longitudinalement dans le rail R1 et/ou R2 sur toute la longueur et articulée à chacune de ses extrémités à une biellette 12, elle-même articulée dans une chape 13 solidaire de la paroi latérale du rail R1, R2. La réglette 11 est normalement dans une position inactive effacée dans laquelle elle est proche de la paroi correspondante du rail R1, R2. Cependant, par l'une de ses extrémités, elle est couplée à un organe moteur formé dans cet exemple par le noyau plongeur d'un électro-aimant 14 fixé à l'un des bout du rail. L'électroaimant 14 est connecté électriquement à la centrale de commande CC du véhicule. Lorsqu'il est excité, l'électroaimant est ainsi capable de déplacer la réglette vers une position active, dans un plan horizontal parallèlement à elle-même en la rapprochant de l'axe longitudinal du rail R1, R2. Un vérin pyrotechnique peut être employé à la place de l'électro-aimant 14.

Ce dispositif de transmission de signal comprend également des moyens récepteurs comprenant un organe de déclenchement formé, sur la figure 4, par un bouton-poussoir 15 capable de commander un allumeur piézo-électrique 16 disposé sur un support 17 solidaire de l'une des parties d'embase E1 ou E2 du siège S et pénétrant dans le rail R1, R2 de manière que le bouton-poussoir 15 soit situé en face de la réglette 11. L'allumeur piézo-électrique 16 est connecté électriquement par un conducteur 18 au prétensionneur PT et/ou à un autre équipement de sécurité du siège S.

Le mode de réalisation de la figure 5 diffère de celui de la figure 4 uniquement en ce que les moyens récepteurs du dispositif de transmission de signal comportent un percuteur pyrotechnique 19 monté sur le support 17 à la place du bouton-poussoir 15 et de l'allumeur piézo-électrique 16. Le percuteur 19 est alors connecté au prétensionneur PT par l'intermédiaire d'un ou de plusieurs tubes Nonel 20.

Selon le mode de réalisation de la figure 6, le dispositif de transmission de signal comprend des moyens émetteurs formés par un tube Nonel 21 disposé au fond du rail R1, R2 et s'étendant sur toute la longueur de celui-ci. Ce tube Nonel 21 est muni de distance en distance d'orifices de connexion 22 par où un signal pyrotechnique peut être transmis. Le pas de ces orifices de connexion 22 est égal à celui d'une crémaillère (non représentée) disposée dans le rail et permettant de bloquer, de façon connue en soi, le siège le long du rail dans des positions de réglage prédéterminées.

Les moyens récepteurs de ce dispositif de transmission de signal comprennent un plongeur 23 monté coulissant verticalement dans un support 24 solidaire du siège S et pénétrant dans le rail R1, R2. Le plongeur 23 est connecté au prétensionneur PT par l'intermédiaire d'un ou de plusieurs tubes Nonel 25.

Le plongeur 23 est couplé au mécanisme de positionnement longitudinal du siège de telle manière que lorsque ce mécanisme libère le siège de la crémaillère, il se soulève à l'encontre de l'action d'un ressort 26 monté dans le support 24 (moitié droite de la figure 6). En revanche, lorsque le siège S est positionné longitudinalement et bloqué par le mécanisme de positionnement, il est situé dans l'un des orifices de communication 22 du tube Nonel 21 (moitié de gauche de la figure 6). Le tube Nonel 21 peut être allumé par une amorce 27 placée à l'une de ses extrémités et recevant son signal d'allumage de la centrale de commande CC.

Dans tous les modes de réalisation représentés sur les figures, les rails peuvent être obturés par des lèvres élastiques de protection qui ne s'écartent l'une de l'autre qu'aux endroits de passage des mécanismes de verrouillage et des moyens émetteurs du dispositif de transmission selon l'invention.

## Revendications

1. Dispositif de transmission de signaux de commande entre le système de commande (CC) d'un véhicule.automobile et un siège démontable (S) de ce véhicule, notamment les signaux de commande destinés à activer l'équipement de sécurité (PT) de ce siège, ce siège (S) étant, en configuration d'utilisation, verrouillé dans deux rails parallèles (R1, R2) montés dans le plancher (P) du véhicule et conformés de manière à autoriser, au moyen d'un mécanisme de verrouillage (B), l'installation du siège (S) en une position quelconque souhaitée le long des rails (R1, R2), ledit dispositif comportant des moyens émetteurs de signaux (1-1, 1-2, 3; 11 à 14; 21, 22), ces moyens émetteurs étant connectés fonctionnellement audit système de commande (CC) du véhicule,
**caractérisé en ce que** lesdits moyens émetteurs sont montés dans au moins l'un des rails (R1, R2) et s'étendent sur toute la longueur de celui-ci, **en ce que**
des moyens récepteurs de signaux (6, 8; 6, 9, 10; 15 à 18; 17, 19, 20; 23 à 26) sont prévus sur le siège (S) et agencés pour, lors du verrouillage du siège (S) sur les rails (R1, R2), venir se brancher sur lesdits moyens émetteurs (1-1, 1-2, 3; 11 à 14; 21, 22), ces moyens récepteurs (6, 8; 6, 9, 10; 15 à 18; 17, 19, 20; 23 à 26) étant connectés fonctionnellement audit équipement (PT) du siège (S),
- et **en ce que** le branchement entre les moyens émetteurs (1-1, 1-2, 3; 11 à 14; 21, 22) et les moyens récepteurs (6, 8; 6, 9, 10; 15 à 18; 17, 19, 20; 23 à 26) est assuré automatiquement pendant le verrouillage mécanique du siège (S) sur les rails (R1, R2).

2. Dispositif de transmission suivant la revendication 1, **caractérisé en ce que** lesdits moyens émetteurs comprennent un organe formant anode (1-1, 1-2) s'étendant dans ledit rail (R1, R2) et connecté électriquement à un élévateur de tension (3) commandé par ledit système de commande (CC), **en ce que** lesdits moyens récepteurs comprennent un organe formant cathode (6) destiné à définir avec ledit organe formant anode ((1-1, 1-2) un éclateur et **en ce que** ledit organe formant cathode (6) est connecté fonctionnellement audit équipement de sécurité (PT).

3. Dispositif de transmission suivant la revendication 2, **caractérisé en ce que** ledit organe formant anode est une barre conductrice (1-1, 1-2) disposée dans le fond dudit rail (R1, R2) en en étant isolée et courant sur toute la longueur de ce rail, et **en ce que** ledit organe formant cathode est une électrode (6) solidaire et isolée dudit siège (S) et connectée fonctionnellement audit équipement de sécurité (PT).

4. Dispositif de transmission suivant la revendication 3, **caractérisé en ce que** ledit organe formant cathode (6) est connecté électriquement audit équipement de sécurité (PT).

5. Dispositif de transmission suivant la revendication 3, **caractérisé en ce que** ledit organe formant cathode (6) est connecté à un allumeur pyrotechnique (9) relié audit équipement de sécurité (PT) par l'intermédiaire d'au moins un tube conducteur pyrotechnique (10).

6. Dispositif de transmission suivant la revendication 1, **caractérisé en ce que** lesdits moyens émetteurs comprennent un organe mécanique d'actionnement allongé (11) s'étendant sur toute la longueur du rail (R1, R2) et mobile entre une position non active effacée et une position active dans laquelle il peut être placé par un organe moteur (14) commandé par ledit système de commande (CC), et **en ce que** lesdits moyens récepteurs comprennent un organe de déclenchement (15, 16) solidaire du siège (S) et actionnable lorsqu'il est amené dans ladite position active, par ledit organe mécanique d'actionnement (14) pour transmettre un ordre pyrotechnique audit équipement de sécurité (PT).

7. Dispositif de transmission suivant la revendication 6, **caractérisé en ce que** ledit organe mécanique d'actionnement est une réglette (11) s'étendant dans le rail (R1, R2) sur toute la longueur de celui-ci et montée articulée à ses deux extrémités sur une biellette (12) respective articulée à son tour sur le rail (R1, R2), et **en ce que** ladite réglette (11) est connectée au noyau plongeur d'un électro-aimant (14) monté pour pouvoir être commandé par ledit système de commande (CC) et placer ladite réglette (11) dans sa position active.

8. Dispositif de transmission suivant l'une quelconque des revendications 6 et 7, **caractérisé en ce que** ledit organe de déclenchement comprend un bouton-poussoir (15), ainsi qu'un allumeur piézo-électrique (16) actionné par ce bouton-poussoir et connecté électriquement audit équipement de sécurité (PT).

9. Dispositif de transmission suivant l'une quelconque des revendications 6 et 7, **caractérisé en ce que** ledit organe de déclenchement est un percuteur pyrotechnique (19) connecté audit équipement de sécurité (PT) par au moins un tube conducteur pyrotechnique (20).

10. Dispositif suivant la revendication 1, **caractérisé en ce que** ledit mécanisme de verrouillage (B) coopère avec une crémaillère disposée dans ledit rail (R1, R2) pour le positionnement dudit siège dans des positions le long du rail déterminées par le pas de ladite crémaillère, **en ce que** lesdits moyens émetteurs comprennent un tube conducteur pyrotechnique (21) s'étendant dans le rail (R1, R2) sur toute la longueur de celui-ci et pourvu de distance en distance d'orifices de transmission avec un pas identique à celui de ladite crémaillère (22), et **en ce que** lesdits moyens récepteurs comprennent un plongeur (23) pouvant être sélectivement engagé dans l'un desdits orifices (22) par le verrouillage dudit siège (S) dans chacune desdites positions, pour transmettre l'énergie pyrotechnique véhiculée dans ledit tube conducteur pyrotechnique (22) vers ledit équipement de sécurité (PT), et dégagé d'un tel orifice par ledit mécanisme de verrouillage (B) pour autoriser le déplacement du siège le long dudit rail (R1, R2).

## Patentansprüche

1. Vorrichtung zum Übertragen von Steuersignalen zwischen dem Steuersystem (CC) eines Kraftfahrzeugs und einem demontierbaren Sitz (S) dieses Fahrzeugs, wobei insbesondere die Steuersignale dazu bestimmt sind, die Sicherheitsausstattung (PT) dieses Sitzes zu aktivieren, wobei dieser Sitz (S) in Konfiguration der Benutzung in zwei parallelen Schienen (R1, R2) verriegelt ist, welche in dem Boden (P) des Fahrzeugs montiert und derart montiert sind, dass sie mit Hilfe eines Verriegelungsmechanismus (B) die Installation des Sitzes (S) in einer beliebigen gewünschten Position entlang der Schienen (R1, R2) gestatten, wobei die Vorrichtung umfasst Mittel zum Ausgeben von Signalen (1-1, 1-2, 3; 11 bis 14; 21, 22), wobei die Ausgabemittel mit dem Steuersystem (CC) des Fahrzeugs funktionell verbunden sind,
**dadurch gekennzeichnet, dass**
die Ausgabemittel in wenigstens einer der Schienen (R1, R2) montiert sind und sich über deren gesamte Länge erstrecken,
dass die Mittel zum Empfangen von Signalen (6, 8; 6, 9, 10; 15 bis 18; 17, 19, 20; 23 bis 26) auf dem Sitz (S) vorgesehen sind und angeordnet sind, um bei der Verriegelung des Sitzes (S) auf den Schienen (R, 1, R2) an die Ausgabemittel (1-1, 1-2, 3; 11 bis 14; 21, 22) angeschlossen zu werden, wobei die Empfangsmittel (6, 8; 6, 9, 10; 15 bis 18; 17, 19, 20; 23 bis 26) funktionell mit der Ausstattung (PT) des Sitzes (S) verbunden sind,
und dass das Anschließen zwischen den Ausgabemitteln (1-1, 1-2, 3; 11 bis 14; 21, 22) und den Empfangsmitteln (6, 8; 6, 9, 10; 15 bis 18; 17, 19, 20; 23 bis 26) automatisch während der mechanischen Verriegelung des Sitzes (S) auf den Schienen (R1, R2) sichergestellt ist.

2. Vorrichtung zum Übertragen nach Anspruch 1, **dadurch gekennzeichnet, dass** die Ausgabemittel eine eine Anode bildende Einrichtung (1-1, 1-2) umfassen, welches sich in der Schiene (R1, R2) erstreckt und mit einem Spannungserhöher (3) elektrisch verbunden ist, welcher durch das Steuersystem (CC) gesteuert wird; dass die Empfangsmittel eine eine Kathode bildende Einrichtung (6) umfassen, welches dazu bestimmt ist, mit der eine Anode bildenden Einrichtung (1-1, 1-2) eine Funkenstrecke zu bilden, und dadurch, dass die eine Kathode bildende Einrichtung (6) funktionell mit der Sicherheitsausstattung (PT) verbunden ist.

3. Vorrichtung zum Übertragen nach Anspruch 2, **dadurch gekennzeichnet, dass** die eine Anode bildende Einrichtung ein leitender Stab ist, welcher in dem Boden der Schiene (R1, R2) angeordnet ist und welcher isoliert und laufend über die gesamten Länge dieser Schiene ist, und dadurch, dass die eine Kathode bildende Einrichtung eine Elektrode (6) verbunden mit und isoliert von dem Sitz (S) und funktionell verbunden mit der Sicherheitsausstattung (PT) ist.

4. Vorrichtung zum Übertragen nach Anspruch 3, **dadurch gekennzeichnet, dass** die eine Kathode bildende Einrichtung (6) elektrisch verbunden mit der Sicherheitsausstattung (PT) ist.

5. Vorrichtung zum Übertragen nach Anspruch 3, **dadurch gekennzeichnet, dass** die eine Kathode bildende Einrichtung (6) mit einer pyrotechnischen Zündvorrichtung (9) verbunden ist, welche leitend mit der Sicherheitsausstattung (PT) verbunden ist über wenigstens ein pyrotechnisches Leitungsrohr (10).

6. Vorrichtung zum Übertragen nach Anspruch 1, **dadurch gekennzeichnet, dass** die Ausgabemittel ein verlängertes mechanisches Teil zum Betätigen (11) umfassen, welches sich über die gesamte Länge der Schiene (R1, R2) erstreckt und zwischen einer zurückgestellten inaktiven Position und einer aktiven Position beweglich ist, in welche es durch ein Motorteil (14) gebracht werden kann, welches durch das Steuersystem (CC) gesteuert wird, und dadurch, dass die Empfangsmittel eine Auslöseeinrichtung (15, 16) umfassen, welche fest mit dem Sitz (S) verbunden ist und betätigbar ist, wenn sie in die aktive Position durch die mechanische Betätigungseinrichtung (14) gebracht wird, um einen pyrotechnischen Befehl an die Sicherheitsausstattung (PT) zu übertragen.

7. Vorrichtung zum Übertragen nach Anspruch 6, **dadurch gekennzeichnet, dass** die mechanische Betätigungseinrichtung eine Leiste (11) ist, welche sich in der Schiene (R1, R2) über die gesamte Länge derselben erstreckt, und an ihren beiden Enden gelenkig auf einem jeweiligen Schwingarm (12) befestigt verbunden ist, welcher seinerseits mit der Schiene (R1, R2) gelenkig verbunden ist, und dadurch, dass der Schwingarm (11) mit dem eintauchenden Joch eines angebrachten Elektromagneten (14) verbunden ist, um durch das Steuersystem (CC) gesteuert werden zu können, und um die Leiste (11) in ihre aktive Position bringen zu können.

8. Vorrichtung zum Übertragen nach einem der Ansprüche 6 und 7, **dadurch gekennzeichnet, dass** die Auslöseeinrichtung einen Druckknopf (15) sowie einen piezoelektrischen Zünder (16) umfasst, welcher durch diesen Druckknopf betätigt wird und elektrisch mit der Sicherheitsausstattung (PT) verbunden ist.

9. Vorrichtung zum Übertragen nach einem der Ansprüche 6 und 7, **dadurch gekennzeichnet, dass** die Auslöseeinrichtung ein pyrotechnischer Schlagbolzen (19) ist, welcher mit der Sicherheitsausstattung (PT) durch wenigstens ein pyrotechnisches Leitungsrohr (20) verbunden ist.

10. Vorrichtung nach Anspruch 1, **dadurch gekennzeichnet, dass** der Verriegelungsmechanismus (B) mit einer Zahnstange zusammenwirkt, die in der Schiene (R1, R2) angeordnet ist, zum Positionieren des Sitzes in den Positionen entlang der Schiene, welche durch die Teilung der Zahnstange bestimmt werden, und dass die Ausgabemittel ein pyrotechnisches Leitungsrohr (21) umfassen, welches sich in der Schiene (R1, R2) über die gesamte Länge derselben erstreckt, und von Abstand zu Abstand mit Öffnungen zum Übertragen versehen ist mit einer Teilung, die identisch zu der der Zahnstange (22) ist, und dadurch, dass die Empfangsmittel einen Stößel (23) umfassen, welcher selektiv in eine der Öffnungen (22) eingebracht werden kann durch die Verriegelung des Sitzes (S) in jeder der Positionen, um die pyrotechnische Energie, welche in dem pyrotechnisch leitenden Rohr (22) transportiert wird, an die Sicherheitsausstattung (PT) zu übertragen, und aus dem Eingriff mit einer solchen Öffnung gebracht werden kann durch den Blockiermechanismus (B), um das Verschieben des Sitzes entlang der Schiene (R1, R2) zu erlauben.

## Claims

1. A device for the transmission of control signals between the control system (CC) of an automobile vehicle and a removable seat (S) of this vehicle, in particular control signals adapted to activate the safety equipment (PT) of this seat, this seat (S) being locked, when configured for use, on two parallel rails (R1, R2) mounted on the floor (P) of the vehicle and shaped so as to enable, by means of a locking mechanism (B), the installation of the seat (S) in any desired position along the rails (R1, R2), the device comprising signal transmission means (1-1, 1-2, 3; 11 to 14; 21, 22), these transmission means being functionally connected to the vehicle control system (CC), **characterised in that** the signal transmission means are mounted in at least one of the rails (R1, R2) and extend over the entire length thereof, **in that** signal reception means (6, 8; 6, 9, 10; 15 to 18; 17, 19, 20; 23 to 26) are provided on the seat (S) and arranged such that, during locking of the seat (S) on the rails (R1, R2), they are connected to the transmission means (1-1, 1-2, 3; 11 to 14; 21, 22), these reception means (6, 8; 6, 9, 10; 15 to 18; 17, 19, 20; 23 to 26) being functionally connected to the equipment (PT) of the seat (S), and **in that** the connection between the transmission means (1-1, 1-2, 3; 11 to 14; 21, 22) and the reception means (6, 8; 6, 9, 10; 15 to 18; 17, 19, 20; 23 to 26) is ensured automatically during the mechanical locking of the seat (S) on the rails (R1, R2).

2. A transmission device as claimed in claim 1, **characterised in that** the transmission means comprise a member forming an anode (1-1, 1-2) extending in the rail (R1, R2) and connected electrically to a voltage booster (3) controlled by the control system (CC), **in that** the reception means comprise a member forming a cathode (6) adapted to form, with the member forming the anode (1-1, 1-2), a sparking device, and **in that** the member forming the cathode (6) is functionally connected to the safety equipment (PT).

3. A transmission device as claimed in claim 2, **characterised in that** the member forming the anode is a conductor rod (1-1, 1-2) disposed in the base of the rail (R1, R2) and is isolated therein and runs over the entire length of the rail, and **in that** the member forming the cathode (6) is an electrode (6) rigid with and insulated with respect to the seat (S) and connected functionally to the safety equipment (PT).

4. A transmission device as claimed in claim 3, **characterised in that** the member forming the cathode (6) is connected electrically to the safety equipment (PT).

5. A transmission device as claimed in claim 3, **characterised in that** the member forming the cathode (6) is connected to a pyrotechnic ignition device (9) connected to the safety equipment (PT) by means of at least one pyrotechnic conductor tube (10).

6. A transmission device as claimed in claim 1, **characterised in that** the transmission means comprise an elongate mechanical actuation member (11) extending over the entire length of the rail (R1, R2) and moving between a retracted inactive position and an active position in which it may be disposed by a drive member (14) controlled by the control system (CC), and **in that** the reception means comprise an activation member (15, 16) rigid with the seat (S) which may be actuated when it is brought into the active position, by means of the mechanical actuation member (14), in order to transmit a pyrotechnic instruction to the safety equipment (PT).

7. A transmission device as claimed in claim 6, **characterised in that** the mechanical actuation member is a strip (11) extending in the rail (R1, R2) over its entire length and mounted in an articulated manner at both its ends on a connecting rod (12) respectively mounted in an articulated manner on the rail (R1, R2) and **in that** the strip (11) is connected to the solenoid plunger of an electromagnet (14) mounted to be able to be controlled by the control system (CC) and to dispose the strip (11) in its active position.

8. A transmission device as claimed in any one of claims 6 and 7, **characterised in that** the activation member comprises a push button (15) and a piezoelectric ignition device (16) actuated by the push button and connected electrically to the safety equipment (PT).

9. A transmission device as claimed in any one of claims 6 and 7, **characterised in that** the activation member is a pyrotechnic striking pin (19) connected to the safety equipment (PT) by means of at least pyrotechnic conductor tube (20).

10. A device as claimed in claim 1, **characterised in that** the locking mechanism (B) cooperates with a rack disposed in the rail (R1, R2) for the positioning of the seat in positions along this rail determined by the pitch of this rack, **in that** the transmission means comprise a pyrotechnic conductor tube (21) extending in the rail (R1, R2) over its entire length and provided at intervals with transmission orifices with a pitch identical to that of the rack (22), and **in that** the reception means comprise a plunger (23) which may be selectively engaged in one of these orifices (22) by the locking of the seat (S) in each of these positions in order to transmit the pyrotechnic energy carried in the pyrotechnic conductor tube (22) to the safety equipment (PT), and released from such an orifice by the locking mechanism (B) in order to enable the displacement of the seat (S) along the rail (R1, R2).
